Europäisches Patentamt

European Patent Office

Office européen des brevets

(19)

(11) Veröffentlichungsnummer : **0 026 401**
B1

# (12) EUROPÄISCHE PATENTSCHRIFT

(45) Veröffentlichungstag der Patentschrift :
05.10.83

(21) Anmeldenummer : 80105589.8

(22) Anmeldetag : 18.09.80

(51) Int. Cl.³ : **B 27 D** 3/04, B 30 B 5/06

(54) **Vorrichtung zum Aufbringen einer Flächenpressung auf fortschreitende Werkstücke.**

(30) Priorität : 20.09.79 DE 2937972

(43) Veröffentlichungstag der Anmeldung :
08.04.81 Patentblatt 81/14

(45) Bekanntmachung des Hinweises auf die Patenterteilung : 05.10.83 Patentblatt 83/40

(84) Benannte Vertragsstaaten :
FR GB IT NL SE

(56) Entgegenhaltungen :
DE A 2 735 142
DE B 2 404 523
US A 3 863 562

(73) Patentinhaber : **Theodor Hymmen KG**
**Theodor-Hymmen-Strasse 3**
**D-4800 Bielefeld 1 (DE)**

(72) Erfinder : **Der Erfinder hat auf seine Nennung**
**verzichtet**

(74) Vertreter : **Hoefer, Theodor, Dipl.-Ing.**
**Kreuzstrasse 32**
**D-4800 Bielefeld 1 (DE)**

Vorrichtung zum Aufbringen einer Flächenpressung auf fortschreitende Werkstücke

Die Erfindung betrifft eine Vorrichtung zum Aufbringen einer Flächenpressung auf fortschreitende Werkstücke gemäß Oberbegriff des Anspruchs 1.

Aus der DE-A1-2 735 142 ist bekannt, oberhalb oder unterhalb eines auf der Oberseite oder der Unterseite durchlaufenden Werkstückes Druckkammern vorzusehen, welche etwa die ganze Breite des fortschreitenden Werkstückes überdecken. Derartige große Druckkammern, die von einem Druckmittel, wie Druckluft beaufschlagt werden, haben verschiedene Nachteile. Die in Richtung des Preßbandes gerichteten Dichtungsstreifen oder -leisten an der offenen Seite einer solchen Druckkammer werden in Durchlaufrichtung des Werkstückes erheblich stärker beansprucht als die Dichtungen quer zur Durchlaufrichtung. Dieses führt zu unterschiedlicher Abnutzung und vorzeitigem Verschleiß und auch zu Luftverlusten. Infolge der großen Länge der Dichtungsstreifen läßt sich diese Dichtung nicht aus einem Stück herstellen. Es gibt eine oder mehrere Stoßstellen, die ebenfalls zu Lecks bzw. Druckverlusten führen. Auf die in Durchlaufrichtung laufenden Abschnitte der Dichtungsstreifen wirken große Kräfte ein, so daß diese Streifen abgestützt werden müssen, was aber nur mit großem konstruktivem Aufwand möglich ist. Blei plötzlich eintretendem starken Druckverlust drückt das Werkstück das Preßband gegen die Innenflächen der Druckkammern. Es kommt zu erheblichem Verschleiß, wenn diese Innenflächen nicht mit besonderem Gleitmaterial belegt sind. Auch diese lediglich zur Erzielung von Notlaufeigenschaften erforderlichen Vorkehrungen sind aufwendig und schwierig herzustellen.

Aufgabe der Erfindung ist es, die gattungsgemäße Vorrichtung so weiterzubilden, daß die Dichtungsstreifen ohne Stoßstellen oder Fugen ausgebildet und ohne aufwendige Abstützungen versehen sind, sowie gute Notlaufeigenschaften aufweisen. Die Dichtungsstreifen sollen leicht auswechselbar sein. Außerdem soll die Druckkammer an unterschiedliche Werkstückbreiten in einfacher Weise angepaßt werden können.

Gemäß der Erfindung wird diese Aufgabe gemäß Kennzeichenteil von Anspruch 1 gelöst. Durch eine Verkleinerung der Druckkammer wird die Ausbildung und die Wirkung der an diesen kleineren Druckkammern angesetzten Dichtungsstreifen verbessert.

Bei einer bevorzugten Ausführungsform der Erfindung sind die Druckkammern als Rundkörper in ihrer Grundform ausgebildet. Sie können dabei in ihrer Grundform kreisförmig, oval oder ähnlich ausgebildet sein. Durch eine Vielzahl derartiger kleiner Druckkammern ist das Dichtungsproblem besonders vorteilhaft zulösen. Einerseits sind solche Druckkammern insbesondere mit kreisförmiger Grundform, d. h. als Zylinderabschnitte sehr vorteilhaft herstellbar. Die kreisringförmigen Dichtungsstreifen können aus einem Stück, d. h. ohne Fugen, hergestellt werden. Aufgrund ihrer vorteilhaften Form wird die Dichtung (die Dichtungsstreifen) allseitig gut abgestützt und ein vorzeitiger Verschleiß vermieden. Da es sich auch um verhältnismäßig kleine Ringflächen handelt, lassen sich ihre Flächen sehr präzise bearbeiten. Es fallen damit Schwierigkeiten infolge von Bearbeitungsungenauigkeiten fort, die bei den bisherigen Dichtungen auftraten.

Kleine Dichtungsstreifen können auch leicht ausgewechselt werden. Durch einfaches Aneinanderreihen von weiteren kleineren Druckkammern lassen sich die gesamten wirksamen Druckflächen auf das Preßband je nach gewünschter Preßflächengröße verbreitern (vergrößern) oder verlängern. Dabei kann immer wieder auf die gleichen Bauteile zurückgegriffen werden. Es ist weiterhin möglich, die kleinen Druckkammern in Reihen zusammenzufassen, die in Durchlaufrichtung des Preßbandes nebeneinander liegen und jeweils gesondert mit einem Druckmittel (reihenweise) beaufschlagt werden. Dadurch lassen sich unterschiedliche Drücke über die Breite der Druckfläche (Preßfläche) und eine unterschiedliche effektive Nutzbreite der Preßfläche mit sehr einfachen Mitteln herstellen.

Bevorzugt ist die Dichtung von einer Fassung in der Nut einer Druckplatte geführt und das Preßband an der Dichtung entlanggleitend angeordnet, wobei zwischen der Fassung und der Nut ein Abstand eingehalten ist, welcher von einer mit einer Seite an der Fassung und mit der anderen Seite an einer Wand der Nut fest anliegenden elastischen Dichtung überbrückt ist. Die Fassung ist bevorzugt an ihrem dem Preßband zugewandten Ende an mehreren in den Bereich der Nut hineinragenden festen Haltebügeln seitlich abgestützt. Eine solche Ausbildung der Vorrichtung gewährleistet, daß ein Verkanten der Fassung in der Nut nicht möglich ist, auch wenn die in der Druckkammer befindliche Druckluft bei der Einwirkung auf die Seitenfläche der Dichtung eine zur Oberfläche des Pressbandes parallel gerichtete Kraft erzeugt und diese Kraft sich an der Fassung als Moment auswirkt, welches ein Verschwenken der Fassung innerhalb der Nut hervorrufen kann. Die Fassung kann also infolge des Druckmittels ständig an das Pressband angedrückt werden und sich innerhalb der Nut geringfügig hin- und herbewegen.

Weitere bevorzugte Ausführungsformen der Erfindung sind in den abhängigen Ansprüchen enthalten.

Ausführungsbeispiele der Erfindung sind in der Zeichnung dargestellt und werden im folgenden näher beschrieben.

Es zeigen :

Figur 1 ein Unteransicht vieler teilzylinderförmiger Druckkammern in der Formgebung entsprechend Fig. 2 ;

Figur 2 eine Seitenansicht einer teilzylinderförmigen Druckkammer mit seitlich davon angeordneten weiteren gleichen Druckkammern in geschnittener Darstellung an einer Tragplatte mit Luftzuführung entsprechend der Schnittlinie II-II der Fig. 1 ;

Figur 3 eine Seitenansicht einer Vorrichtung mit jeweils oberhalb und unterhalb der umlaufenden Preßbänder angeordneten zylinderförmigen Druckkammern, (teilweise geschnitten) ;

Figur 4 eine Draufsicht auf eine andere Ausführung von Druckkammern in Dreieckgrundform ;

Figur 5 eine Draufsicht auf die in Fig. 4 gezeigten dreieckförmigen Druckkammern, die gegeneinander zur Vergrößerung der Druckflächenbreite auseinandergezogen sind ;

Figur 6 eine Führungseinrichtung für die an einer Tragplatte angesetzten Druckkammern ;

Figur 7 eine aus zwei konzentrischen Fassungen aufgebaute Druckkammer ;

Figur 8 eine in einer Nut der Druckplatte mit einer elastischen Dichtung angeordnete Fassung für die Preßbanddichtung ;

Figur 9 eine gegenüber Fig. 8 abgewandelte Ausführung der Fassung mit der elastischen Dichtung.

Die erfindungsgemäße Vorrichtung besteht aus einem unteren Rahmen 10 und einem oberen Rahmen 11, in die jeweils endlose Preßbänder 12 eingebaut sind. Die Preßbänder 12 sind auf Umlenkrollen 13 gespannt und von diesen antreibbar. Sie sind mit einem Spalt zueinander angeordnet, der der Breite eines zu bearbeitenden Werkstückes 14 entspricht. Während die Preßbänder 12 mit ihren das Werkstück 14 berührenden Oberflächen eine waagerechte Bewegung ausführen wird das Werkstück 14 in die Vorrichtung und zwar in den Spalt, der zwischen den Oberflächen besteht, hineingezogen und dort von den Oberflächen der Preßbänder 12 mit Druck beaufschlagt. Bei Durchlauf des Werkstückes 14 durch die Vorrichtung erfolgt somit seine Bearbeitung, so daß es als fertig bearbeitetes Werkstück den Spalt zwischen den Preßbänder 12 am Austritt aus der Vorrichtung verläßt.

Im vorliegenden Beispiel werden auf die Ober- und Unterseite des Werkstückes 14 Folien 15 aufgepreßt, die von Vorratsrollen 16 ablaufen. Ein solcher Preßvorgang kann bei Raumtemperatur erfolgen, er kann aber auch gleichzeitig das Aufbringen von hohen Temperaturen auf das Werkstück 14 im Bearbeitungsbereich vorsehen. Zur Erzeugung des gewünschten Druckes kann der obere Rahmen 11 insgesamt gegen den unteren Rahmen 10 gepreßt werden oder es kann nach einer Grobeinstellung des Abstandes zwischen dem oberen Rahmen 11 und dem unteren Rahmen 10 der erforderliche Druck, mittels des Luftdruckes ausgeübt werden, der in den Druckkammern 17 herrscht, die jeweils an der Rückseite des Preßbandes 12 in Bezug auf das Werkstück 14, also an der Oberfläche des Preßbandes 12, welche nicht mit dem Werkstück 14 in Berührung steht, angeordnet sind.

Für die Grobeinstellung sind Führungsschlitten 18 vorgesehen, die an dem unteren Rahmen 10 fest angeordnet sind und an denen der obere Rahmen 11 in senkrechter Richtung verschiebbar ist. Für die Verschiebung sorgen Hydraulikzylinder 19. Die Druckkammern 17 sind von Druckplatten 20 begrenzt, die gegenüber den Rahmen 10 und 11 geführt sind und deren Bewegung von Hydraulikzylindern 20a hervorgerufen wird.

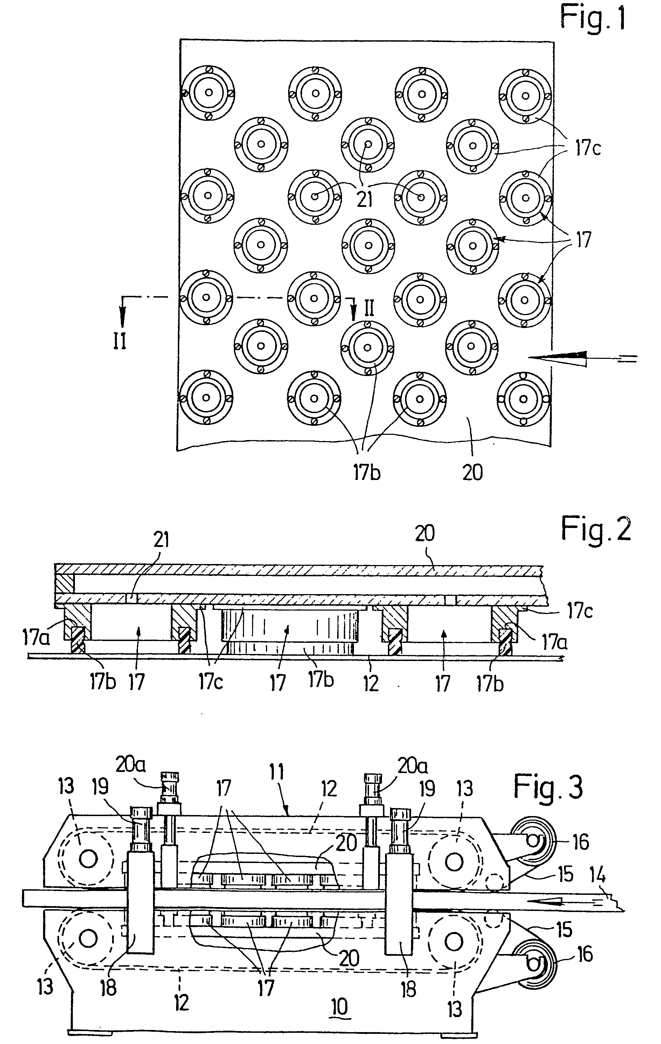

Gemäß Fig. 2 bis 3 der Zeichnung sind die einzelnen Druckkammern 17 als teilzylinderförmige Körper ausgebildet, in deren Rand der offenen Seite in einer Nut 17a ringförmige Dichtungsstreifen 17b befestigt sind. Diese Nut 17a ist stirnseitig eingearbeitet und die Dichtungsstreifen 17b stehen jeweils aus dieser Nut 17a unter Bildung einer Dichtlippe vor, deren Stirnfläche sich dichtend gegen die Innenfläche des umlaufenden Preßbandes 12 anlegt. Entgegen dem Dichtungsstreifen 17b ist der Teilzylinder der Druckkammer 17 mit einem Ringflansch 17c versehen, der mittels Schrauben od. dgl. an einer ebenen Druckplatte 20 befestigt ist. Diese Tragplatten 20 haben Luftzuführungskanäle 21, durch die von seitlichen Anschlüssen von Druckmittelzuleitungen Druckluft den einzelnen Druckkammern 17 zugeführt wird. Diese teilzylinderförmigen Druckkammern 17 sind in Reihen angeordnet, die sich einerseits quer zur Umlaufrichtung des Preßbandes 12 erstrecken und andererseits mit ihren Druckkammern 17 versetzt zueinander verlaufen. Die auf Luke angeordneten Druckkammern 17 bieten eine Druckbeaufschlagung auf der Innenseite des Preßbandes 12 über die ganze Breite und auch über eine gewisse Länge.

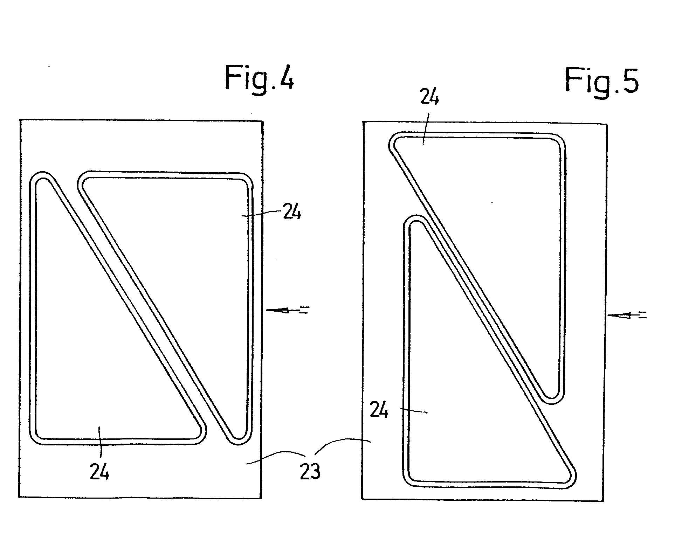

Die Figuren 4 und 5 zeigen ein weiteres Ausführungsbeispiel, bei dem die Druckkammern 24 jeweils in ihrer Grundform dreieckförmig ausgebildet sind. Dabei liegen die Hypothenusen der rechtwinkligen Dreiecke benachbart und schräg zur Umlaufrichtung des Pressbandes 12. Diese dreieckförmigen Druckkammern 24 sind quer zu der durch einen Pfeil angegebenen Umlaufrichtung des Preßbandes verschiebbar, so daß bei auseinandergeschobenen Druckkammern 24 eine größere Breite der Druckfläche auf das Preßband zu erzielen ist, andererseits aber beide Druckkammern 24 schmaler sind. Diese Ausführungen zeigen den Vorteil, daß die quer zur Umlaufrichtung des Preßbandes verlaufenden Dichtungsstreifen länger sind als die in Umlaufrichtung sich erstreckenden Dichtungsstreifen, so daß die einer größeren Beanspruchung unterliegenden Dichtungsstreifen kürzer gehalten sind.

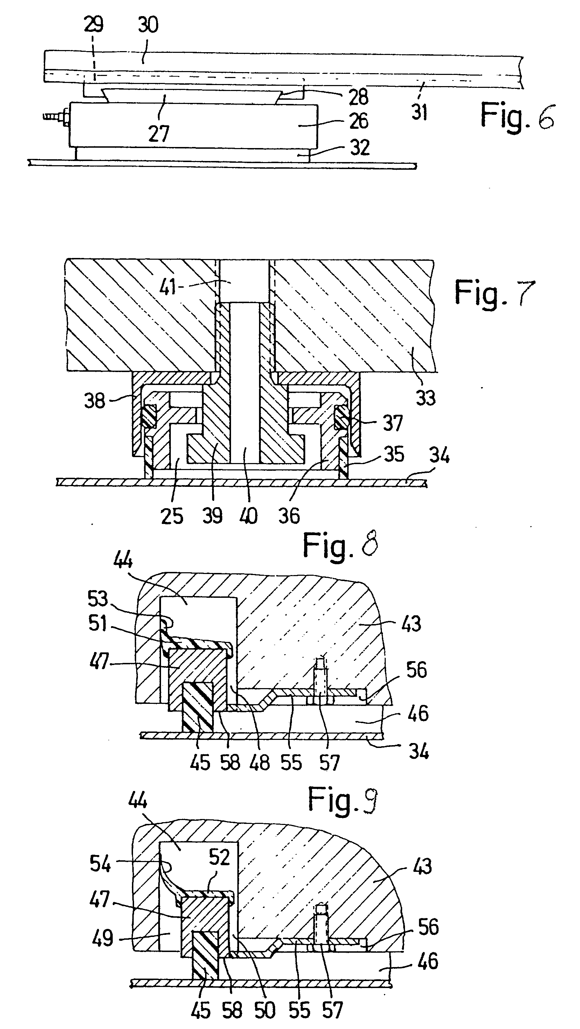

In Fig. 6 ist eine Support-ähnliche Führungseinrichtung für eine Tragplatte dargestellt. Hierbei greift die Tragplatte 26 mit einem Schwalbenschwanz 27 in eine entsprechende Nut 28 verschiebbar ein, die wiederum in einem quer dazu verlaufenden Schwalbenschwanz 29 angeordnet ist, der in die Führungsleiste 30 mit entsprechender Nut 31 einfaßt. Durch eine solche Führungseinrichtung ist es in vorteilhafter Weise möglich, eine Tragplatte 26 mit einer oder mehreren Druckkammern 32 sowohl in Umlaufrichtung des Preßbandes als auch quer dazu verschieben.

Fig. 7 zeigt eine aus zwei konzentrisch angeordneten Fassungen aufgebaute Druckkammer 25, die zwischen einer Druckplatte 33 und einem Preßband 34 angeordnet ist. Die auf dem Preßband 34 aufliegende Dichtung 35 ist in eine Ausnehmung der inneren Fassung 36 eingesetzt. Eine elastische Dichtung 37 überbrückt den Abstand zwischen der inneren Fassung 36 und der diese umgebenden äußeren Fassung 38. Die innere Fassung 36 kann sich somit reibungslos gegenüber der äußeren Fassung 38 geringfügig bewegen.

Mit Hilfe eines Schraubteiles 39, das eine durchgehende Bohrung 40 für das Druckmittel aufweist, ist die äußere Fassung 38 an der Druckplatte 33 angeschraubt. Dabei liegen der als Gewindebohrung 41 ausgebildete Druckmittel-Zufuhrkanal der Druckplatte 33 und die Bohrung 40 konzentrisch zueinander. Infolge des Druckmittels wirken zwei Kräfte gegeneinander, die sich durch die von der Ringfläche der Dichtung mit dem Druckmittel hervorgerufene Kraft unterscheiden. Aufgrund dieser Kraftdifferenz wird die innere Fassung 36 mit der Dichtung 35 ständig zum Preßband 34 hin gedrückt.

Durch die Ausführungen gemäß Fig. 7, 8 und 9 der Zeichnung ist in besonderer Weise während des Betriebes ein ständiges Anliegen der Dichtung an dem daran entlanggleitenden Preßband gewährleistet. Bei Abweichungen des Preßbandes aus seiner Bewegungsebene wird eine ungehinderte Bewegung der Dichtung mit der Fassung senkrecht zur Preßbandebene ermöglicht. Die Gefahr eines Verkantens der die Dichtung tragenden Fassung besteht somit nicht.

Die Druckplatte 43 in Fig. 8 und 9 weist an ihrer dem Preßband 34 zugewandten Oberfläche eine umlaufende Nut 44 zur Befestigung einer Dichtung 45 auf. Im eingebauten Zustand liegt diese Dichtung 45 an dem Preßband 34 an, welches im Betrieb an der Dichtung entlanggleitet. Die Druckkammer 46 wird somit von der von dem Werkstück 14 abgewandten Oberfläche des Preßbandes 34 und von der umlaufenden Dichtung 45 gebildet. Über Öffnungen in der Druckplatte 43 wird das Druckmittel in die Druckkammer 46 eingeleitet.

Die Dichtung 45 wird in der Nut 44 von einer Fassung 47 gehalten. Diese weist ebenfalls eine umlaufende und zum Preßband 34 offene Nut auf, in welche die im Querschnitt rechteckige Dichtung 45 eingesteckt ist. Die Fassung 47 ist senkrecht zum Preßband 43 innerhalb der Nut 44 verschiebbar angeordnet, während die Dichtung 45 innerhalb der Fassung 47 festsitzt. Die Breite der Fassung 47 ist kleiner ausgeführt als die Breite der Nut 44, so daß zwischen der Nut 44 und der Fassung 47 ein Abstand 48 bestehen bleibt. Gemäß Fig. 8 der Zeichnung ist der Abstand 48 zu beiden Seiten gleich groß, während sich gemäß Fig. 9 der Zeichnung zwei verschiedene Abstände 49 und 50 ergeben. An der am weitesten innerhalb der Nut 44 befindlichen zum Preßband 34 parallelen Oberfläche der Fassung 47 ist eine gummielastische Dichtung 51 bzw. 52 angeordnet, die mit einem Rand 53 bzw. 54 an einer Nutwand anliegt und auf diese Weise den Innenraum der Nut 44 gegenüber der Atmosphäre abdichtet. Der Rand 54 gemäß Fig. 9 ist länger ausgeführt, als der Rand 53 gemäß Fig. 8. Diese Dichtung 52 kann daher größere Auslenkungen der Fassung 47 infolge elastischer Verformung ausgleichen. Während der Auslenkungsbewegungen der Fassung 47 bleibt der Rand 53 bzw. 54 an der Wand der Nut 44 haften, eine Gleitreibung tritt an dieser Stelle nicht auf. An ihrem dem Preßband 34 zugewandten Ende ist die Fassung 47 seitlich von mehreren Haltebügeln 55 abgestützt, die um das Maß des Abstandes 48 bzw. 50 in den Bereich der Nut 44 hineinragen. Jeder Haltebügel ist mit einem Ende innerhalb einer Ausnehmung 56 an der Druckplatte 43 angeschraubt. Zu dieser Befestigung dient ein Schraubenbolzen 57. Zwischen zwei aufeinander folgenden Haltebügeln ist jeweils ein Abstand eingehalten, der es ermöglicht, daß Druckmittel aus der Druckkammer 46 durch den von dem Abstand 48 bzw. 50 bestimmten Raum in das Innere der Nut 44 einströmen kann.

Druckmittel, beispielsweise Druckluft, kann durch Öffnungen der Druckplatte 43 in die Druckkammer 46 gelangen und so einen gleichmäßigen statischen Druck in der Druckkammer 46 und in dem von der Fassung 47 nicht eingenommenen Raum der Nut 44 aufbauen. Dieser Druck erzeugt eine Kraft, die die Dichtung 45 senkrecht auf das Preßband 34 drückt. Dieser Kraft wirkt eine kleiner Kraft entgegen, welche von dem Druck des Druckmittels in der Druckkammer 46 und der zum Preßband 34 gewandten Teiloberfläche 58 der Fassung 47 innerhalb der Druckkammer 46 bestimmt wird. Es genügt also, daß der Druck des Druckmittels innerhalb der Druckkammer 46 geringfügig über dem Atmosphärendruck liegt, um ständig eine resultierende Kraft zu erzeugen, die die Dichtung 45 an das Preßband 34 andrückt.

Im Betrieb der Vorrichtung wird die Fassung 47 mit der Dichtung 45 aufgrund des Überdruckes in der Druckkammer 46 und der Nut 44 ständig in Richtung zum Preßband 34 hin gedrückt, welches an der Dichtung 45 entlanggleitet. Auslenkungen aus der Preßbandebene kann die Dichtung 45 und mit ihr die Fassung 47 leicht folgen, weil die Reibung zwischen der Fassung 47 und der Druckplatte 43 sehr gering ist. Zwischen der Oberfläche der Fassung 47 und den Wänden der Nut 44 tritt überhaupt keine Reibung auf. Die einzige Stelle, an der eine geringfügige Reibung auftreten kann, ist jeweils die Berührungsstelle zwischen dem Haltebügel 55 und der Fassung 47. Die Fassung 47 kann sich auch geringfügig um diesen Berührungspunkt verschwenken, so daß ein Verkanten in der Nut 44 völlig ausgeschlossen ist.

## Ansprüche

1. Vorrichtung zum Aufbringen einer Flächenpressung auf fortschreitende Werkstücke mit mindestens einem umlaufenden Preßband (12, 34), das durch Druckmittel innerhalb von mit Dichtungsstreifen (17b, 35, 45) ausgestatteten, auf der wirksamen Druckfläche des Preßbandes (12, 34) hintereinander angeordneten Druckkammern (17, 25, 32, 24, 46) auf der Innenseite des Preßbandes (12) an das Werkstück anpressbar ist, gekennzeichnet durch eine Vielzahl von auf der wirksamen Druckfläche des Preßbandes (12, 34) quer zur Durchlaufrichtung angeordneten und zur Breitenanpassung an das durchlaufende Werkstück zu- und abschaltbare kleineren Druckkammern (17, 25, 32, 24, 46).

2. Vorrichtung nach Anspruch 1, dadurch gekennzeichnet, daß die Druckkammern (24) sich überschneidend angeordnet sind.

3. Vorrichtung nach Anspruch 1 oder 2, dadurch gekennzeichnet, daß die Druckkammern (17, 24, 32) eine längliche, ovale, kreisförmige oder dreieckförmige Grundfläche aufweisen, wobei die Hypothenusen bei dreieckförmiger Grundform benachbart angeordnet sind.

4. Vorrichtung nach den Ansprüchen 1 bis 3, dadurch gekennzeichnet, daß die Druckkammern (24, 32) quer und/oder längs zur Umlaufrichtung des Preßbandes (12) verschiebbar mittels einer Verschiebeeinrichtung gelagert sind.

5. Vorrichtung nach den Ansprüchen 1 bis 4, dadurch gekennzeichnet, daß die Dichtung (45) von einer Fassung (47) in der Nut (44) einer Druckplatte (43) geführt und das Preßband (34) an der Dichtung (45) entlanggleitend angeordnet ist, wobei, zwischen der Fassung (47) und der Nut (44) ein Abstand (48 bzw. 49, 50) eingehalten ist, welcher von einer mit einer Seite an der Fassung (47) und mit der anderen Seite an einer Wand der Nut (44) fest anliegenden elastischen Dichtung (51 bzw. 52) überbrückt ist.

6. Vorrichtung nach den Ansprüchen 1 bis 5, dadurch gekennzeichnet, daß die Fassung (47) an ihrem dem Preßband (34) zugewandten Ende an mehreren in den Bereich der Nut (44) hineinragenden festen Haltebügeln (55) seitlich abgestützt ist, die jeweils mit einem innerhalb einer Ausnehmung (56) der Druckplatte (43) in diese eingeschraubten Schraubenbolzen (57) befestigt sind.

7. Vorrichtung nach den Ansprüchen 1 bis 6, dadurch gekennzeichnet, daß zwischen zwei aufeinanderfolgenden Haltebügeln (55) jeweils eine Durchtrittsöffnung zum Innenraum der Nut (44) für das Druckmittel freigelassen ist.

8. Vorrichtung nach den Ansprüchen 1 bis 7, dadurch gekennzeichnet, daß die elastische Dichtung (51 bzw. 52) innerhalb der Nut (44) an der von dem Preßband (34) abgewandten Stirnseite der Fassung (47) bzw. an deren von der Druckkammer (46) am weitesten entfernten Wand anliegt.

9. Vorrichtung nach den Ansprüchen 1 bis 8, dadurch gekennzeichnet, daß die Druckkammer (25) jeweils von einer äußeren, an der Druckplatte (33) befestigten Fassung (38) und einer dazu konzentrischen, senkrecht zum Preßband (34) beweglichen inneren Fassung (36) gebildet ist, in welche die Dichtung (35) eingesetzt ist.

10. Vorrichtung nach den Ansprüchen 1 bis 9, dadurch gekennzeichnet, daß zwischen der äußeren Fassung (38) und der inneren Fassung (36) ein Abstand eingehalten ist, der von einer gummielastischen Dichtung (37) überbrückt ist, und die äußere Fassung (38) mittels eines dazu konzentrischen, mit einer zentralen durchgehenden Bohrung versehenen Schraubteils (39) an der Druckplatte (33) angeschraubt ist.

**Claims**

1. Apparatus for applying surface pressure into advancing workpieces including at least one rotating press belt (12, 34) to be pressed on his internal surface against the workpiece by pressure medium induced in pressure chambers (17, 25, 32, 24, 26) walled in by sealing strips (17b, 35, 45) and located on said effective internal surface over the length of said press belt (12, 34), characterised by a plurality of smaller pressure chambers (17, 25, 32, 24, 26) located on the effective pressure surface of said press belt (12, 34) in a direction at right angles to the longitudinal direction of movement of said press belt (12, 34) and connectable and disconnectable for adaptation to the width of said advancing workpieces.

2. Apparatus according to claim 1, characterised in that said pressure chambers (24) are disposed overlapping one another.

3. Apparatus according to claim 1 or 2, characterised in that said pressure chambers (17, 24, 32) have a cross-section of elongate rectangular with radiused ends, oval, circular or triangular, said triangular pressure chambers being disposed so that the hypothenuses are adjacent one another.

4. Apparatus according to claims 1 to 3, characterised in that said pressure chambers (24, 32) are displaceable by a displacement device in a direction at right angles to and/or in the longitudinal direction of the movement of said press belt (12).

5. Apparatus according to claims 1 to 4, characterised in that said sealing member (45) is guided by a frame member (47) located in a groove (44) of a pressure plate (43) and said sealing member (45) slidingly engaged by said press belt (34), said frame member (47) and said groove (44) together defining a space (48, 49, 50), an elastic sealing member (51, 52) spanning said space (48, 49, 50), and having a first end portion and a second end portion, said first end portion connecting said sealing member (51, 52) to said frame member (47) and said second end portion sealing abutting said recessed wall portion defining said groove (44).

6. Apparatus according to claims 1 to 5, characterised in that said frame member (47) has an end portion facing that press belt (34) and is supported laterally by a plurality of retaining yokes (55), projecting in the region of said groove (44), and connected by a screw bolt (57), each screw threaded to said pressure plate (43) having a recess (56) receiving said screw bolt (57).

7. Apparatus according to claims 1 to 6, characterised in that two adjacent yokes (55) define a passage aperture there between said aperture opening into the interior of said groove (44) and acting as a conduit for said pressure medium.

8. Apparatus according to claims 1 to 7, characterised in that said elastic sealing member (51, 52) abutting against an end face averted from the press belt (34) of said frame member (47) or abutting against an end wall averted from the pressure chamber (46).

9. Apparatus according to claims 1 to 8, characterised in that said pressure chamber (25) comprises an outer frame (38) and an inner frame (36), said outer frame (38) being secured to said pressure plate (33) and said inner frame (36) being concentric with said outer frame (38), said inner frame (36) being displaceable vertically with respect to said press belt (34), said inner frame (36) carrying said sealing member (35).

10. Apparatus according to claims 1 to 9, characterised in that said outer frame (38) and said inner frame (36) jointly define a space, a resilient rubber sealing member (37) spanning said space, and that the outer frame (38) is connected to said pressure plate (43) by a screw (39) extending concentrically to said outer frame member (38) and having a centrally disposed bore extending therethrough.

## Revendications

1. Appareil pour l'application d'une pression superficielle à des pièces qui avancent, comportant au moins une bande de compression tournante (12, 34) qui peut être poussée contre la pièce par de l'agent de pression à l'intérieur de chambres de pression (17, 25, 32, 24, 46) disposées sur la surface active de pression de la bande de compression (12, 34) du côté intérieur de la bande de compression (12) et équipées intérieurement de bande de joint (17b, 35, 45), caractérisé par de multiples chambres de pression plus petites (17, 25, 32, 24, 46) disposées sur la surface active de la bande de compression (12, 34), transversalement à la direction de passage et pouvant être mises en action et hors d'action pour l'adaptation à la pièce qui passe.

2. Appareil selon la revendication 1, caractérisé par le fait que les chambres de pression (24) sont disposées avec recoupement entre elles.

3. Appareil selon l'une des revendications 1 et 2, caractérisé par le fait que les chambres de pression (17, 24, 32) présentent une surface fondamentale allongée, ovale, circulaire ou triangulaire, les hypothénuses, dans le cas d'une forme triangulaire, étant voisines.

4. Appareil selon les revendications 1 à 3, caractérisé par le fait que les chambres de pression (24, 32) sont montées de manière à pouvoir coulisser transversalement à la direction de rotation de la bande de compression (12) et/ou suivant cette direction, au moyen d'un dispositif de coulissement.

5. Appareil selon les revendications 1 à 4, caractérisé par le fait que le joint (45) est guidé par une monture (47) dans la rainure (44) d'une plaque de pression (43) et que la bande de compression (34) est disposée de manière à glisser le long du joint (45), et qu'entre la monture (47) et la rainure (44) est ménagé un espacement (48, 49, 50) qui est franchi par un joint élastique (51, 52) s'appliquant fermement par un côté à la monture (47) et par l'autre côté à une paroi de la rainure (44).

6. Appareil selon les revendications 1 à 5, caractérisé par le fait que la monture (47), à son extrémité tournée vers la bande de compression (34), est soutenue latéralement par plusieurs étriers de retenue fixes (55) pénétrant dans la région de la rainure (44) et qui sont fixés chacun par un boulon fileté (57) vissé dans la plaque de pression (43) à l'intérieur d'un évidement (56) de celle-ci.

7. Appareil selon les revendications 1 à 6, caractérisé par le fait qu'entre deux étriers de retenue (55) qui se suivent est chaque fois ménagée une ouverture de passage vers l'intérieur de la rainure (44) pour l'agent de pression.

8. Appareil selon les revendications 1 à 7, caractérisé par le fait que le joint élastique (51, 52) s'applique, à l'intérieur de la rainure (44), contre le côté frontal de la monture (47) qui est opposé à la bande de compression (34) ou contre la paroi la plus éloignée de la chambre de pression (46).

9. Appareil selon les revendications 1 à 8, caractérisé par le fait que la chambre de pression (25) est chaque fois formée par une monture extérieure (38) fixée à la plaque de pression (33) et une monture intérieure (36), concentrique à la première, mobile perpendiculairement à la bande de compression (34) et dans laquelle est inséré le joint (35).

10. Appareil selon les revendications 1 à 9, caractérisé par le fait qu'entre la monture extérieure (38) et la monture intérieure (36) est ménagé un espacement qui est franchi par un joint (37) élastique à la façon du caoutchouc et que la monture extérieure (38) est vissée à la plaque de pression (33) au moyen d'un élément fileté (39) qui lui est concentrique et est muni d'une perforation centrale de part en part.

Fig.1

Fig.2

Fig.3

Fig.4

Fig.5

24

24

24

24

23

Fig. 6

Fig. 7

Fig. 8

Fig. 9